# EUROPEAN PATENT SPECIFICATION

(11) **EP 2 248 692 B1**
(45) Date of publication and mention of the grant of the patent: **27.03.2013**
(21) Application number: 10162362.7
(22) Date of filing: 07.05.2010
(51) Int. Cl.: B60H 1/00, B60H 1/22, B60H 1/24

(54) **Defrost system**
Abtausystem
Système de dégivrage

(30) Priority: 07.05.2009 GB 0907790
(43) Date of publication of application: 10.11.2010
(73) Proprietor: Nissan Motor Manufacturing (UK) Ltd., Cranfield Bedfordshire MK43 0DB (GB)
(72) Inventor: Pagett, Mark, Bedford, Bedfordshire MK43 0DB (GB); Linchyk, Alexandra, Bedford, Bedfordshire MK43 0DB (GB)

(56) References cited:
- EP-A1- 0 713 792
- DE-A1- 10 046 216
- DE-A1- 19 808 571
- DE-U1- 20 304 546

## Description

### Field of the invention

The present invention relates to a defrost system for a vehicle and, more specifically, to an infra red based defrost system for a vehicle windscreen.

### Background of the invention

Most vehicles sold today are provided with some means for clearing condensation or ice from the inside of the windscreen and in some cases the vehicle is provided with means for melting ice or snow from the outside of the windscreen.

This is achieved in a variety of ways, the most common of which is via a heating, ventilation and air conditioning or HVAC system integrated into the vehicle.

The HVAC system typically comprises a heat exchanger, a blower fan and ducting to draw fresh air from outside the vehicle, through the heat exchanger towards the inner surface of the windscreen. The heat exchanger is heated by a fluid connection with a cooling system of an internal combustion (IC) engine arranged to provide the motive power for the vehicle. The HVAC system in this arrangement provides the vehicle with a demist or defrost system.

Whilst this method is common it suffers the known problem that the efficacy of the HVAC system in defrosting or demisting the windscreen is dependent on the temperature of the heat exchanger. The vehicle windscreen typically requires defrosting or demisting at the beginning of a journey on a cold or damp day however this is when the engine and therefore the heat exchanger is also cold, limiting the defrost performance.

To improve upon defrost performance, the HVAC system may further comprise an air conditioning unit which serves to reduce the moisture content of the air passing through the heat exchanger. Drying the air before blowing it against the surface of the windscreen greatly improves the time to clear the condensation from the glass even if the temperature of the air is relatively low.

Blowing air against the inside of the windscreen, whilst relatively effective in defrosting or demisting the inside of the glass, is less effective in clearing snow or ice from the outside of the windscreen. One solution is to provide the windscreen with electrical heating elements embedded in the windscreen material to produce an electrically heated windscreen.

Electrically heated windscreens may have discrete zones within the visible area of the windscreen which are electrically conductive. These zones are often located along the base of the windscreen adjacent to where wiper blades are positioned at rest. These systems only heat the bottom edge of the windscreen and are only intended to prevent the wiper blades from freezing to the windscreen in very cold conditions.

Alternatively, the heating elements may take the form of extremely fine wires embedded within the glass, these wires which are so fine that they are barely visible to the driver. The wires have to be very fine so as to avoid distracting the driver. However, fine wires are susceptible to breakage due to localised stress concentrations. These stress concentrations are caused by differences in expansion co-efficient between the wire and the glass. These systems are arranged to heat all of the visible area of the windscreen and are intended to clear ice or snow from a substantial part of the windscreen very quickly. These are more complicated and expensive than the windscreens provided with discrete heating zones and also tend to consume a considerable amount of electrical power in use. In addition, the cost to repair or replace of such a windscreen is considerably more than that of a non-heated windscreen resulting in the overall cost of vehicle ownership.

In the case of electrically powered vehicles, rather than those using an internal combustion (IC) engine to power the vehicle, electrical power and battery life are at a premium. Conventional vehicle HVAC systems are not used as there is no significant source of heat from the batteries or the electric motors unlike that available from the cooling system of an internal combustion (IC) engine.

Heating the glass electrically requires a significant current draw. In addition, heating air via a conventional heating element and directing it towards the windscreen uses a great deal of electrical power and tends to be quite inefficient.

EP 0 713 792 discloses a defrost system upon which the preamble of appending claim 1 is based.

It is against this background that the present invention seeks to improve upon known demist or defrost systems by providing a windscreen defrost system using infra-red light.

### Summary of the invention.

Aspects of the present invention relate to an apparatus for defrosting or demisting a surface of the first independent claim and a method of defrosting or demisting a surface according to the second independent claim.

According to an aspect of the present invention for which protection is sought there is provided an apparatus for defrosting a transparent member of a vehicle such as a windscreen, the apparatus comprising: an infra red light source arranged to emit infra-red light; and a reflector means, at least partly surrounding the infra red light source and arranged to direct the infra red light towards the transparent member, the reflector means further defining, at least in part, a passageway between the infra red light source and the reflector means for guiding air towards the transparent member, and wherein the passageway comprises a screen, configured to be substantially transparent to infra red light and arranged to cover the reflector means adjacent to the transparent member and arranged to permit a free flow of air thereto characterised in that the reflector means is arranged to form a Venturi tube comprising three portions: a reflector portion forming an air outlet end, arranged to reflect and direct the infra red light from the infra red light source towards the transparent member; an air inlet, positioned distal from the reflector portion and configured to engage with an air duct; and a throat portion positioned between the air inlet and the air outlet, wherein at least part of the infra red light source is positioned adjacent to the throat portion with the passageway formed therebetween and, wherein the throat portion is arranged to accelerate the air past the infra red light source towards the transparent member.

Advantageously, the present invention provides a improvement over the known defrost systems as the infra red (IR) light serves to both defrost the interior of a vehicle windscreen and remove snow or ice from the exterior of the windscreen. The flow of air directed towards the interior of the windscreen, heated between the IR lamp and the reflector, greatly improves defrost or demist performance. The defrost system of the present invention may be installed as a single unit comprising only one lamp and one reflector. Alternatively, the vehicle may be provided with an array of multiple units arranged so as to direct IR light and air evenly across the entire visible area of the windscreen.

Advantageously, the use of a Venturi tube accelerates the air flowing past the infra red light source towards the windscreen. Accelerating the air serves to maintain the optimal lamp temperature and avoids the upper surface of the defroster becom ing too hot for the surrounding structures. Use of a Venturi tube allows for a greater airflow velocity for a given air supply pressure. The air may be supplied via ducting from a standard vehicle HVAC system or via a dedicated blower fan.

According to an embodiment, the apparatus further comprises an insulated tube arranged to at least partly enclose the reflector means and infra red light source. Said tube is configured to mitigate heat loss from the enclosed portion of the reflector means.

Advantageously, the provision of an insulated tube around the defrost system improves efficiency by minimising unwanted heat losses and minimising the exterior temperature of the defrost system during use. Reducing heat losses through the sides of the reflector and the base of the defrost system concentrates the heating effect of the lamp on the air passing past the lamp, improving efficiency. The provision of the insulated tube around the defrost system also facilitates the mounting of the defrost system. The defrost system may be mounted into structures such as an instrument panel or a headlining which are ideally situated relative to the windscreen for the defrost system but are otherwise relatively sensitive to the localised heat produced by the lamp.

According to an embodiment, the apparatus further comprising an air filter arranged to filter the air before it enters the passageway. Said air filter is located upstream of the infra red light source.

Advantageously, the filter prevents particles of dust and other debris from being blown against the infra red lamp when the defrost system is in operation. Filtering the air passing between the lamp and the reflector tends to keep the reflector and lamp clean and clear from dust which would otherwise be detrimental to defrost efficiency and the longevity of the lamp.

According to an embodiment, the apparatus further comprises a means to dehumidify the air before it enters the passageway. Said means to dehumidify the air is located upstream of the infra red light source.

Advantageously, dehumidifying or drying the air before it passes between the lamp and the reflector reduces the risk of moisture build-up on the lamp or reflector which would degrade their performance. Directing dry air against the windscreen greatly improves the efficacy of the defrost system to evaporate any moisture on the windscreen, so defrosting the surface of the windscreen quickly.

According to an embodiment, the apparatus further comprises a fan located upstream of the infra red light source. Said fan is arranged to force air through the passageway towards the transparent member.

Advantageously, each unit of the defrost system of the present invention is provided with a dedicated fan so that the output of each defrost system unit may be controlled independently. In this way, the defrost system is capable of clearing condensation and/or ice from a windscreen as quickly and efficiently as possible. If necessary, the defrost system installed in a vehicle may operate each unit lamp output and/or fan speeds independently, depending on the extent of condensation and/or ice to be cleared.

According to an embodiment, the apparatus further comprises a screen arranged to cover the top end of the reflector means. Said screen is configured to be substantially transparent to infra red light.

Advantageously, the provision of a screen over the top of the reflector reduces the risk of foreign objects from falling into the reflector and contacting the IR lamp. If the defrost system is located in an upper face of an instrument panel of a vehicle, there is a risk the defrost system may become obscured or otherwise blocked by objects such as papers or pens which a user may place on top of the instrument panel. Such an occurrence may prevent the defrost system from working correctly and may potentially cause damage to the defrost system or the object covering the reflector.

According to an embodiment, the apparatus further comprises a trough disposed between the screen and the insulating tube. Said trough is configured to catch and collect any dust or debris that may otherwise fall onto the infra red light source.

If the defrost system is provided with a screen the defrost system may advantageously be further provided with a trough arranged around the edge of the screen configured to catch and collect any matter such as dust or debris that may land on the screen. The trough provides the user with a convenient location from which such matter may be removed without necessitating wiping the screen itself which would otherwise risk damaging or further blocking the screen.

According to an embodiment, the apparatus further comprises a sensor configured to measure the temperature of the reflector means.

Advantageously, the defrost system may be provided with a temperature sensor to determine the temperature of the reflector. A comparison between the reflector temperature and the current consumption of the IR lamp and/or fan may be used to predict or diagnose potential malfunction in one or more of the defrost system components.

According to an embodiment, the apparatus further comprises a sensor configured to measure the pressure of the air in the air inlet upstream of the infra red light source.

Advantageously, measuring the pressure of the air flowing towards the lamp provides an indication of fan and/or filter performance. Additionally, the output of the sensor may also provide an indication that the defrost system is blocked.

According to an embodiment, the apparatus further comprises a sensor configured to determine the presence of an obstruction between the apparatus and the transparent member.

Advantageously, the defrost system may be provided with a proximity sensor to determine if the defrost system is blocked or obscured by a foreign object. The blocking or obscuration of the reflector, screen or lamp would result in a degradation of defrost performance and efficiency and could adversely affect the defrost system or the item blocking it.

According to an embodiment, the apparatus further comprises control means arranged to control the operation of the apparatus in dependence of an input to the control means.

Advantageously, the provision of control means to control the operation of the defrost system may be arranged to control a single unit or multiple defrost system units forming an array so as to defrost the windscreen as quickly and efficiently as possible. In this way, the power of the IR lamp and the speed of the fan of each unit may be controlled independently depending on the condition of the area of the windscreen to be cleared by each unit.

According to an embodiment, the input to the control means is provided by the output from the or each sensor. Said control means is arranged to control the operation of the apparatus in dependence on the output from the or each sensor.

According to another aspect of the invention for which protection is sought, there is provided a vehicle comprising the apparatus of the present invention. Preferably vehicle further comprises a rain sensor. The output of the rain sensor provides an input to the control means arranged to control the operation of the apparatus, such that any obscuration of the visible area of the transparent member is identified by the control means which is arranged to operate the apparatus in dependence thereon.

According to an embodiment, the vehicle further comprises an ambient temperature sensor, wherein the output of the ambient temperature sensor provides an input to the control means arranged to control the operation of the apparatus, such that the control means monitors the ambient temperature and operate the apparatus in dependence thereon.

Advantageously, providing the defrost system control means with information pertaining to the condition of the windscreen allows the control means to anticipate, or even predict the optimal operating configurations for the or each defrost system unit controlled by the control means. This improves the overall efficacy and efficiency of the defrost system for a vehicle.

According to a further aspect for which protection is sought, there is provided a method for removing condensation and/or ice from a surface of a transparent member. The method comprises: directing infra red light from an infra red light source towards the surface of the transparent member by a reflector means; directing air between the infra red light source and the reflector means to heat the air; and directing the heated air via the reflector means towards the surface of the transparent member. Said operation of the infra red light source is controlled in dependence on the obscuration of a predetermined area of the transparent member.

Advantageously this provides an improved method for removing condensation and/or ice from the surface of a transparent member such as a windscreen of a vehicle. The infra red lamp emits infra red light. In an example of the present invention, the light emitted from the lamp is in the infra red medium wave. This light is then directed towards the surface of the transparent member. Infra red light is absorbed by any ice on the surface of the transparent member causing the ice to melt quickly. The infra red lamp also produces heat which is concentrated between the lamp and the reflector. Air forced between the lamp and the reflector is heated and directed towards the surface of the transparent member. Heated air passed over the surface of the transparent member is particularly effective in evaporating any moisture from condensation or melted ice from the surface.

The method provided by the defrost system of the present invention ensures that the output from infra red lamp is used as efficiently as possible, without the need for a source of heat from a conventional vehicle HVAC system. This ensures that the windscreen and/ or other transparent members of the vehicle may be cleared of ice or condensation even if the engine is cold. This is particularly suitable for application in hybrid or electric vehicles where at least the first part of a journey may be completed without an internal combustion (IC) engine running and providing a source of heat.

According to still a further aspect of the present invention for which protection is sought there is provided an apparatus for defrosting a transparent member of a vehicle such as a windscreen, the apparatus comprising: an infra red light source arranged to emit infra-red light; and a reflector means, wherein the reflector means at least partly surrounds the infra red light source for directing the infra red light towards the transparent member and is arranged to define, at least in part, a passageway between the infra red light source and the reflector means for guiding air towards the transparent member.

It will be appreciated by one skilled in the art that the defrost system of the present invention may be suitable for use in applications unrelated to vehicles.

It will also be appreciated by one skilled in the art that the preferred and/or optional features relating to the present invention may be used either alone or in appropriate combination.

### Brief Description of the Drawings

In order that the invention may be more readily understood reference is made, by way of example only, to the accompanying drawings in which:
Figure 1 is a sectional view of a typical vehicle interior;
Figure 2 is a sectional view of a defrost system unit of the present invention;
Figure 3 is a sectional view of another example of the defrost system unit of the present invention;
Figure 4 is an above plan view of the defrost system unit of Figure 3;
Figure 5 is a below plan view of the defrost system unit of Figures 3;
Figure 6 is a perspective side view of the defrost system unit of Figures 3;
Figure 7 is a schematic view of the present invention shown in Figure 3, showing the flow of air through the defrost system unit;
Figure 8 is a sectional side view of the defrost system unit according to a further example of the present invention;
Figure 9 is a sectional side view of the defrost system unit according to a still further example of the present invention; and
Figure 10 is a sectional side view of a defrost system array according to the present invention.

The present invention relates to a defrost system for a vehicle and in particular, to a defrost system with an infra red light source, for example an infra red lamp, arranged to heat air and direct it towards a surface of a transparent member and to direct infra red light onto and through said surface, so as to remove condensation and/or ice from the transparent member.

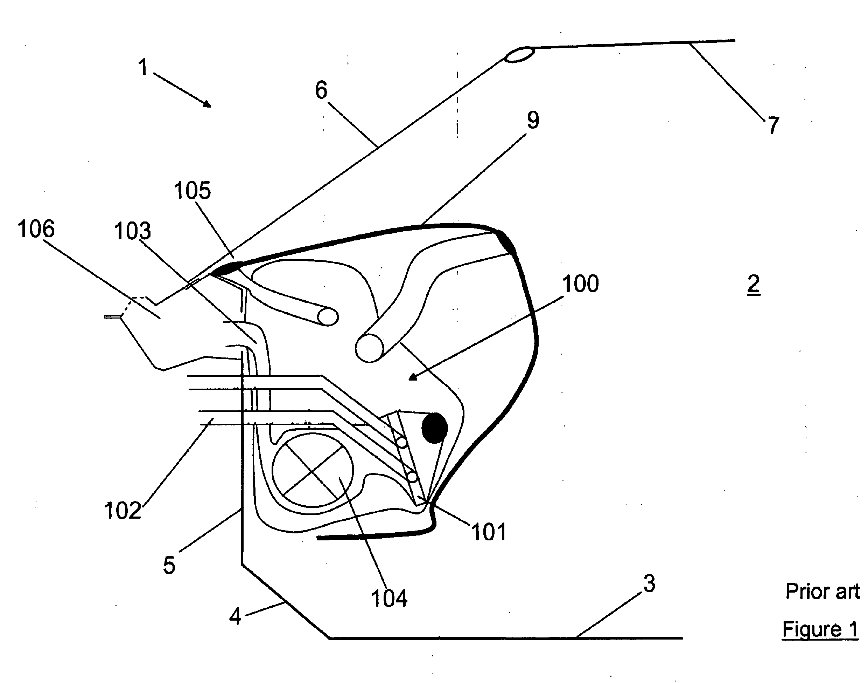

Referring to Figure 1, a cross section through an occupant compartment of a typical vehicle such as a passenger car is shown. Only a portion of the occupant compartment 2 of the vehicle 1 is shown for clarity. Figure 1 shows the relative positions of the key components of the vehicle that have a bearing on the present invention. The portion of the vehicle1 shown has a floor 3, a toe board 4, a bulkhead 5, a windscreen 6 and a roof 7. The floor 3, toe board 4, bulkhead 5 and roof 7 are all components of a vehicle body and are typically although not necessarily formed from sheet metal. The windscreen 6 is typically formed from glass and provides one of several transparent members that combine with the vehicle body to enclose a volume forming the occupant compartment 2. Other transparent members (not shown for clarity) are formed by a rear screen at the back of the occupant compartment 2 and side windows located in and between doors provided to allow access to the occupant compartment 2.

Also visible in Figure 1 is a known heating ventilation and air conditioning unit often referred to as an HVAC unit 100. The HVAC unit 100 shown in Figure 1 is located within a volume formed between the bulkhead 5, the toe board 4 and an instrument panel 9.

The HVAC unit 100 comprises a heat exchanger 101 which is in fluid communication with a cooling system for an internal combustion engine (not shown) via tubing 102. Air is drawn into the HVAC unit 100 via an air inlet 103 which passes through the bulkhead 5 and typically collects air from an opening in a cowl 106. The cowl 106 is located below the windscreen 6 outside of the occupant compartment 2. The air is drawn in through the air inlet 103 by the action of an electrically driven fan or blower 104. The blower 104 forces the air through the heat exchanger 101 to heat the air which is then directed into the occupant compartment 2 and towards the windscreen 6 as desired. There are typically air outlets or defroster vents 105 positioned along the top of the instrument panel 9 adjacent to the base of the windscreen 6. The user may selectively use the HVAC unit 100 to direct air towards the windscreen 6 in order to clear any condensation from the inside of the windscreen by means of evaporation. If snow or ice has accumulated on the outside of the windscreen 6, the user may direct hot air towards the base of the windscreen 6 in order to melt the snow or ice from the outer surface of the windscreen 6.

A known problem with this type of vehicle HVAC unit 100 is that there is little or no availability of hot air from the air outlets or defroster vents 105 before the engine cooling system is up to normal operating temperature. Using cold air alone to clear condensation from the windscreen 6 is time consuming and inefficient. It will be appreciated that the typical vehicle HVAC system is a relatively bulky and heavy item that is often difficult to package within the vehicle. Additionally, a typical vehicle HVAC blower motor consumes a significant amount of electrical power when in use.

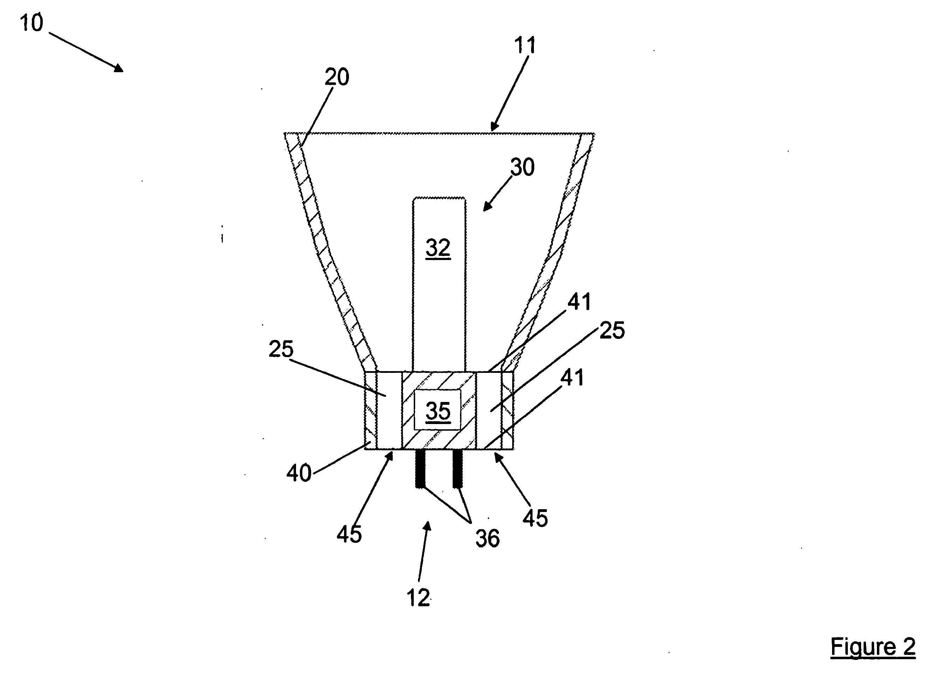

Figure 2 shows a section through an example of a defrost system unit 10 of the present invention. The present invention comprises an infra red light source such as an infra red (IR) lamp 30 mounted to a base 40 which is arranged to support a reflector 20 which at least partly surrounds the lamp 30. The IR lamp 30 has an end arranged to emit infra red light known as light emitting end 32. The infra red lamp used in the present invention is tuned to emit medium wave infra red light. Medium wave infra red light occupies a spectrum of wavelengths between 600nm and 3mm.

It will be appreciated by one skilled in the art that the exact spectrum of light emitted by the lamp may be tuned to a preferred wavelength or frequency or emit a spectrum or band of wavelengths. Varying parameters such as lamp filament material and the temperature of the lamp will vary the wavelength of light emitted from the lamp. It has been shown that infra red light in a spectrum of wave lengths between 1 and 4µm is absorbed efficiently by water molecules.

This range has been shown to be particularly effective when used with water molecules which absorb infra red light efficiently in this range. The light emitting end 32 is integral with and supported by a lamp body 35. Electrical connectors 36 for the lamp 30 extend from the lamp body 35 distal from the light emitting end 32. The body 35 of the lamp 30 is supported on the base 40 via lamp mountings 41 which extend from the base 40. The lamp mountings 41 are shown as dotted lines for clarity.

Also shown in Figure 2 are passageways formed between the lamp body 35, the lamp mountings 41 and the reflector 20. The passageways are formed from a lower and an upper portion. The lower portions are formed in the base 40 between the lamp mountings 41 and are indicated by reference numeral 45. The upper portions are formed between the lamp mountings 41, the lamp body 35 and the reflector 20 and are indicated by reference numeral 25.

In use, air flows from the base 40 through the passageways 25, 45 and between the lamp 30 and the reflector 20. In the example shown in Figure 2, the air flows from a bottom end 11 to a top end 12 due to convection caused by the difference in temperature between the base 40 and the light emitting end 32 when the lamp is activated.

It will be appreciated that at least part of the defrost system of the present invention may be integrated with a conventional vehicle HVAC system. In this way, air from the HVAC blower may be selectively directed to the defrost system via a suitable conduit or branch from the existing HVAC ducting, so that passageways 25, 45 are in fluid communication with the vehicle HVAC system.

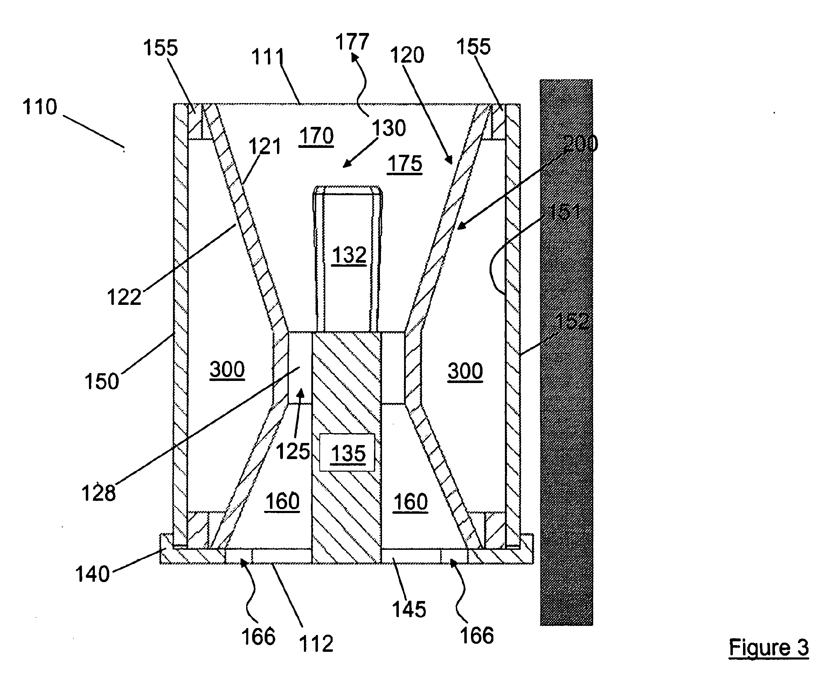

In another example, shown in Figure 3, the defrost system takes the form of a single IR lamp defrost system unit 110. The unit 110 comprises an IR lamp 130 supported on a base 140 such that at least a part of the light emitting end 132 of the lamp 130 is surrounded by the reflector 120. It should be noted that like components, whose functionality is similar between the examples of embodiments shown in the Figures, are given like reference numerals.

The reflector 120 of Figure 3 is longer than that of the reflector 20 shown in Figure 2. The reflector 120 of Figure 3 has been extended to form a Venturi tube 200. The Venturi tube 200 comprises three portions. An upper portion of the Venturi tube forms an air outlet 170, arranged to reflect and direct the infra red light from the lamp 130 towards the windscreen 6 (not shown in Figure 3 for clarity). A lower portion of the Venturi tube 200 forms an air inlet 160 and is positioned distal from the reflector 120. The air inlet 160 may be configured to engage with an air duct (not shown). The air inlet 160 and air outlet 170 are in fluid communication via a throat portion 128 positioned between the air inlet 160 and the air outlet 170. The cross sectional area of the throat portion 128 is smaller than either the air inlet 160 or the air outlet 170.

The infra red lamp 130 is positioned adjacent to the throat portion 128 with a passageway 125 formed therebetween. The throat portion 128 is arranged to accelerate the air from the base 140 and guide the air over the lamp 130 and towards the windscreen 6. The passageway 125 formed in the throat portion 128 is in fluid communication with the outlet passageway 175 formed in the air outlet 170 and the inlet passageway 165 formed in the air inlet 160.

The reflector 120 of Figure 3 takes the form of a truncated cone which extends from the throat portion 128 of the Venturi tube and widens to form the air outlet 170. It is envisaged that the reflector 20, 120 may be a parabolic, spherical or other suitable form or shape to suit a specific application. The reflector has a reflective inner surface 121 which is typically a metallic coating such as gold or aluminium polished to a reflective surface. The reflector has an outer surface 122 whose surface temperature may approach the melting point of the materials used in adjoining structures such as the instrument panel 9 when the defrost system unit 110 is in operation. To manage this and to optimise the use of heat produced by the IR lamp 130, the sides of the unit are surrounded by an insulating tube 150 secured to the Venturi tube 200 by insulating packing pieces 155.

The insulating tube 150 is substantially open at both ends of the Venturi tube 200. The two ends of the Venturi tube 200 are generally coterminous with the insulating tube 150 and are shown in Figure 3 as top end 111 and bottom end 112. The top end 111 and the bottom end 112 are adjacent to the air outlet 170 and the air inlet 160 respectively. In the example shown in Figure 3, the insulating tube 150 supports the top and bottom of the Venturi tube 200 via the packing pieces 155 which are formed from rings of an insulating material such as a ceramic.

An insulating gap or volume 300 is formed between the outer surface 122 of the Venturi tube 200 and an inner surface 151 of the insulating tube 150. The volume 300 may be filled with an inert gas and sealed with the packing pieces 155 during manufacture. Alternatively, the volume defined by the gap may be evacuated to form at least a partial vacuum in order to further optimise the insulating properties of the tube 150. The provision of the gap or volume 300 between the tube 150 and the Venturi tube 200 ensures that an outer surface 152 of the Venturi tube 200 remains relatively cool even during prolonged operation of the defrost system unit 110.

The base 140 of the defrost system unit 110 is arranged to support the packing pieces 155 between the insulating tube 150 and the Venturi tube 200. Base openings or apertures 145 are provided to permit air at ambient temperature to flow into the air inlet 160. The direction of ambient temperature airflow 166 is indicated by dashed arrows.

In the example shown in Figure 3, the lamp body 135 is supported generally coaxially within the throat 128 of the Venture tube 200 and by the base 140. The base further comprises electrical connections (not shown) for the lamp 130 arranged to minimise the disruption of airflow 166 by electrical connections to the lamp 130.

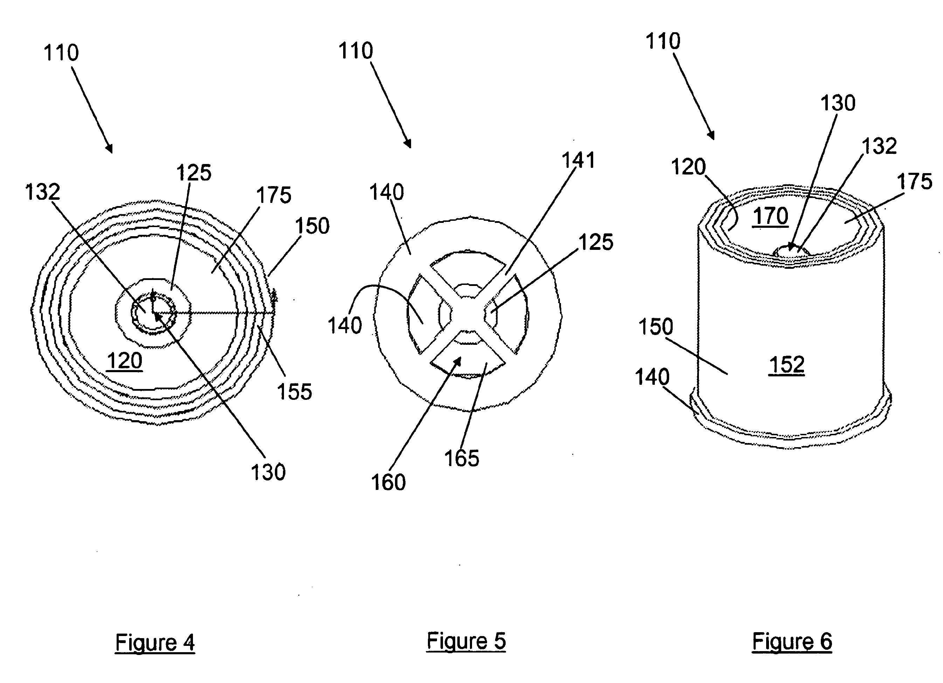

Figure 4 shows an above plan view of the defrost system unit 110 shown in Figure 3. From above, the lamp 130 and insulating tube 150 are both clearly visible. Also visible is the ring shaped packing piece 155 between the reflector 120 and the insulating tube 150. The light emitting portion 132 of the lamp 130 is shown concentrically mounted within the reflector 120. The space between the reflector 120 and the lamp 130 forms the air outlet 175.

Figure 5 shows a below plan view of the defrost system unit 110 shown in Figures 3 and 4. The base 140 covers the bottom end of the tube 150 and packing pieces 155 which are both obscured from view in Figure 5. The base 140 is shown with four base openings or apertures 145, the number or shape of these apertures 145 may be varied according to packaging requirements. The air inlet 160, the inlet passageway 165 and the throat passageway 125 are all visible through the apertures 145 in the base 140.

Figure 6 shows an isometric view of the unit 110 shown in Figures 4 and 5. The light emitting portion 132 of the lamp 130 is shown mounted concentrically in the air outlet 175 formed between the reflective inner surface 121 of the reflector 120 and the lamp 130. Also visible in Figure 6 is the outer surface 152 of the insulating tube 150 and the base 140.

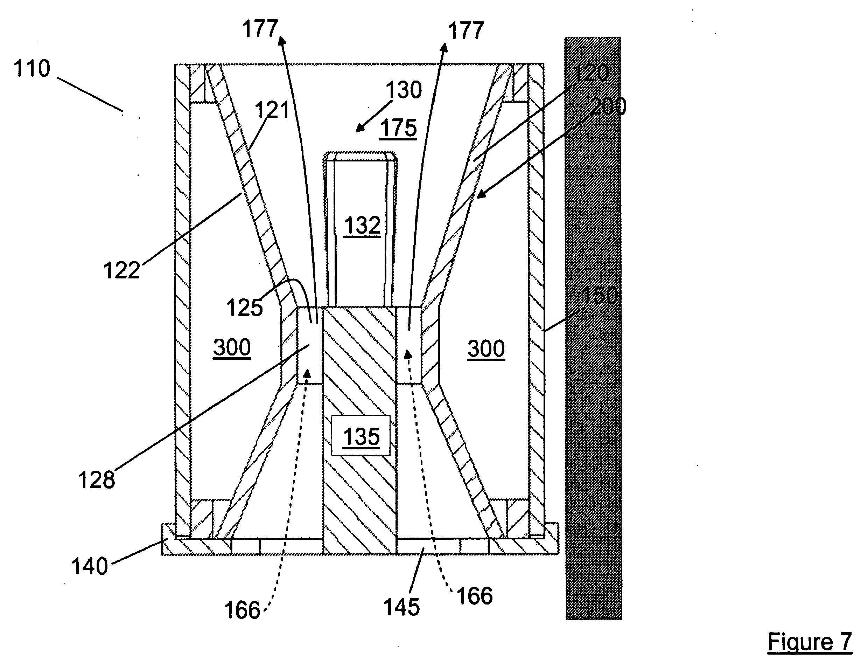

Figure 7 shows a schematic view of a section through the defrost system unit 110 shown in Figures 3 to 6, shows the flow of ambient temperature air 166 indicated by dashed arrows. The flow of ambient temperature air 166 enters the air inlet 165 at the bottom of the defrost system unit 110. The air is then accelerated as it passes through the throat passageway 125. The accelerated air then flows towards the air outlet 170 and passes between the reflective surface 121 of the reflector 120 and the IR lamp 130 where the air is heated. Heated air 177 is then directed by the outlet 170 of the reflector 120 towards the windscreen (not shown). The heated airflow 177 is indicated by solid arrows.

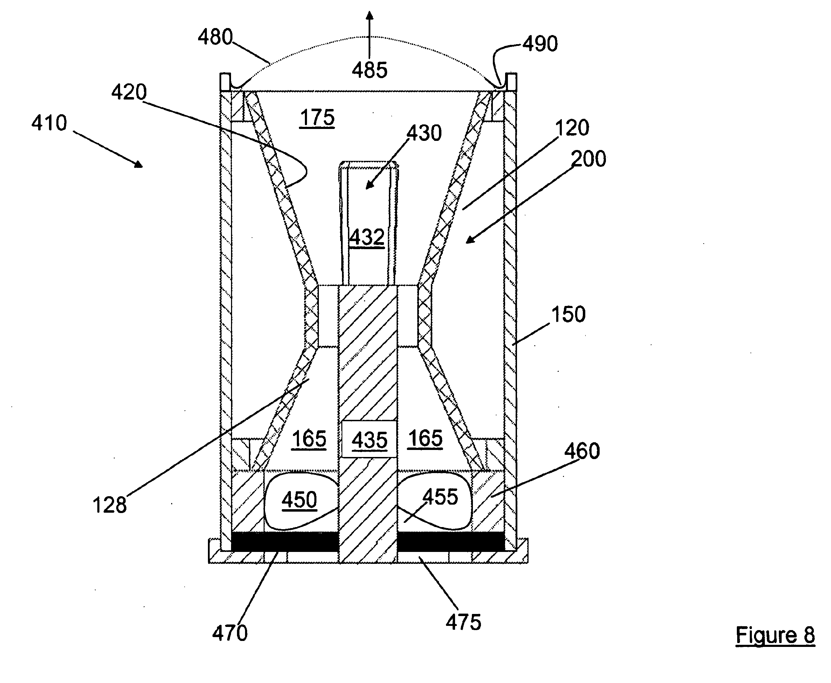

Figure 8 shows an alternative embodiment 410 of the defrost system unit of the present invention. The defrost system unit 410 shown in Figure 8 is provided with an integrated fan 450 and an integrated air filter 470. The fan 450 is disposed in a fan passageway 455 which is in fluid communication with the air inlet 160 and inlet passageway 165 of the Venturi tube 200. The fan 450 is supported around its periphery by a fan support frame 460. The fan support frame 460 is arranged permit the fan 450 to be removed from the insulating tube 150 for maintenance. The fan 450 is held to the fan support frame 460 via a bayonet type connection (not shown). The fan support frame 460 is formed from an insulating material to mitigate the transfer of heat from the Venturi tube 200 into the fan 450.

The air filter 470 is arranged to be removable for replacement and regular service and is disposed in a filter passageway 475 which is in fluid communication with the fan passageway 455. The filter 470 is arranged to prevent any dust or other airborne particles present in the ambient air, from being forced between the reflector and the lamp 430. Contact with dust and other particles could be detrimental to defrost performance and longevity of the component parts of the unit 410, especially the lamp 430. The filter 470 may additionally include means to dehumidify the air entering the air inlet 165. A removable module (not shown) containing a suitable desiccant may be incorporated into the filter 470. Dehumidifying or drying the air prior to heating improves defrost performance of the defrost system unit and improves the longevity of the lamp 430 and reflective surface of the reflector. Exposing some reflectors to high humidity may, in some circumstances, results in the reflective surface becoming tarnished or discoloured which is detrimental to defrost performance. In addition, the exposure of the reflector to moisture may increase the risk of dust particles adhering to the reflective surface of the reflector which would reduce defrost efficiency.

In the case where the filter 470 comprises a desiccant, the desiccant would absorb moisture during the defrost process but could be regenerated by heating the desiccant to a sufficient temperature between operations of the defrost system unit.

While it is envisaged that the features of the fan and the lamp may be provided by discrete off-the-shelf components, the fan 450 shown in Figure 8 is integrated with the lamp to form a ventilated lamp assembly 430. The fan 450 is integral with a main body 435 of the ventilated lamp assembly 430 distal from a light emitting end 432. Electrical connections for the lamp 430 and fan 450 are provided via the fan support frame 460. These electrical connections are configured to provide a means to operate and control the lamp 430 and the fan 450 together or independently as required.

At the top of the defrost system unit 410 shown in Figure 8 is a protective screen 480. The screen 480 is substantially hemi-spherical, its shape prescribed at least in part by a requirement that the screen does not encroach within a minimum distance from the light emitting end 432 of the infra red lamp 430. This minimum distance is set by a requirement for a sufficient volume of air to circulate around the light emitting end 432 of the lamp 430 and that a maximum operating temperature of the screen 480 is not exceeded.

Around the screen 480 is a trough 490 disposed between the screen 480 and the insulating tube 150. The trough 490 acts as a dust trap and may take the form of a separate part of by integrated as a feature of the packing pieces 155 positioned adjacent to the screen 480.

Any particulate matter such as dust, dirt or debris present in the air above may potentially settle on the defrost system unit 410 when the not in operation. The trough 490 is arranged to collect any such particulate matter that settles on the screen 480 without the need for the user to clean the screen 480 itself which may result in accidental damage to the screen.

The screen 480 is arranged to permit a free flow of air from the air outlet 175. The screen 480 may comprise a sheet of transparent material or a mesh of fine wire or fibres which form a plurality of holes or outlets 485 through which the infra red light and heated air may pass. Additionally or alternatively, the screen 480 may be provided with reinforcements (not shown) arranged to prevent other items inadvertently coming into contact with the infra red lamp 430. In some markets it is common for users to place items such as papers or documents on top of the instrument panel during a journey. Such items could obstruct the defrost system units if mounted in the upper surface of the instrument panel, this would be detrimental to defrost performance and potentially cause damage to the items obstructing the reflectors.

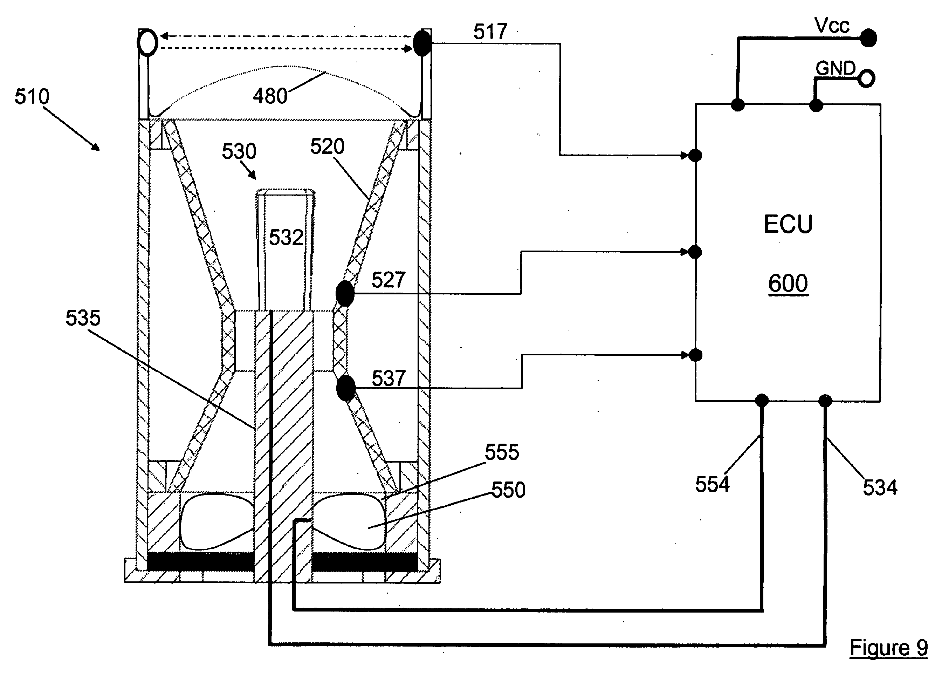

To mitigate these potential problems, a further embodiment of a defrost system 510, shown in Figure 9, is provided with an array of sensors and a control unit 600. The defrost system 510 is provided with an obstruction detector 517 adjacent to the top of a reflector 520. The obstruction detector 517 may take the form of an ultrasonic emitter and receiver array, a scanning laser or a photoelectric cell arranged to determine the presence of an obstruction across the top of the reflector 520 or within a predetermined zone above and around the top of the reflector 520. The defrost system 510 shown in Figure 9 comprises an infra red emitting lamp 530 and a fan 550 which perform the same function as the corresponding components of Figure 8.

The Fan 550 and the lamp 530 are provided with electrical power and control connections 554 and 534 respectively which are connected to a voltage supply via the control unit 600. Monitoring the temperature of the reflector 520 and lamp 530 is a thermocouple 527, the output of which is fed to the control unit 600. Monitoring the back pressure and/or temperature of the air in the air inlet between the fan 550 and the lamp 530 is another sensor array 537, the output of which is also fed to the control unit 600.

An increase in back pressure below the lamp may be indicative of an obstruction of the air outlet. Similarly, a decrease in back pressure for a given fan speed may be indicative of a problem with the fan or a blocked or clogged filter. In either case, the control unit 600 comprises means to monitor and assess the output of each sensor and control the lamp and fan appropriately.

If either of the temperature sensors 527, 537 located above and below the lamp indicate that the temperature has increased above a predetermined threshold, the ECU may reduce lamp voltage and/or increase fan voltage to reduce the temperature.

If the defrost system unit 510 is installed within a vehicle comprising a windscreen rain sensor and/or exterior ambient temperature sensor, the output of these sensors may additionally be fed to the control unit 600. In this case, the control unit 600 is configured to determine or predict if there is a high chance of ice formation on the windscreen due to the ambient temperature, and the control the defrost system unit accordingly. The control unit 600 shown in Figure 9 is arranged to co-ordinate the information from any vehicle based sensor and each sensor integrated into the defrost system unit to determine and configure the most efficient mode of operation of the defrost system unit.

The control unit 600 is arranged to provide an indication to the user of the operating status of the defrost system and notify the user, via an audible and/or visual warning, if an obstruction is detected or if the unit requires maintenance.

It is envisaged that the typical start-up procedure for the defrost system unit of the present invention comprises the following steps:
1. Control unit 600 is activated either selectively by the user, or automatically if the ambient temperature is below a suitable threshold such as 5°C.
2. The control unit 600 checks output of all sensors (517, 527, 537) and confirms the available supply voltage. If the supply voltage is below a threshold, the control unit 600 deactivates automatic activation to preserve available battery charge and issues an appropriate warning to the user. Activation of an auxiliary source of power, such as the activation of an internal combustion engine will result in the control unit 600 resuming the start-up procedure. Otherwise, only the user may then override the control unit 600 and activate the defrost system.
3. The control unit 600 will determine if there is an obstruction over the top of the defrost system unit. If an obstruction is detected the control unit 600 will issue a warning to the user and wait until the obstruction has been cleared. If no obstruction, the defrost system start-up sequence will proceed to step 4.
4. Start the fan (50, 450, 550) and run the fan for a predetermined period of time to ensure there are no obstructions and that the fan is functioning correctly.
5. Once the fan has been running for an appropriate length of time, for example 10 seconds, activate the lamp (30, 130, 430, 530) and monitor the resulting temperature change of the air and/or reflector.
6. De-activate the lamp once the control unit 600 determines that the area of windscreen to be cleared has been cleared sufficiently or if over-ridden by the user.
7. De-activate the fan once the output from the temperature sensors (572, 537) has dropped below a predetermined threshold.
8. The control unit 600 continues to monitor the output of the defrost system sensors (517, 527, 537) and any vehicle sensors such as the rain sensor and the ambient temperature sensor to determine the likely condition of the windscreen. Depending on the output of the sensors, the control unit 600 may re-activate the defrost system if required.
9. De-activate the defrost system when the vehicle has been switched off unless the control unit 600 has been configured to remain on if it determines that an exterior power supply has been connected to the vehicle.

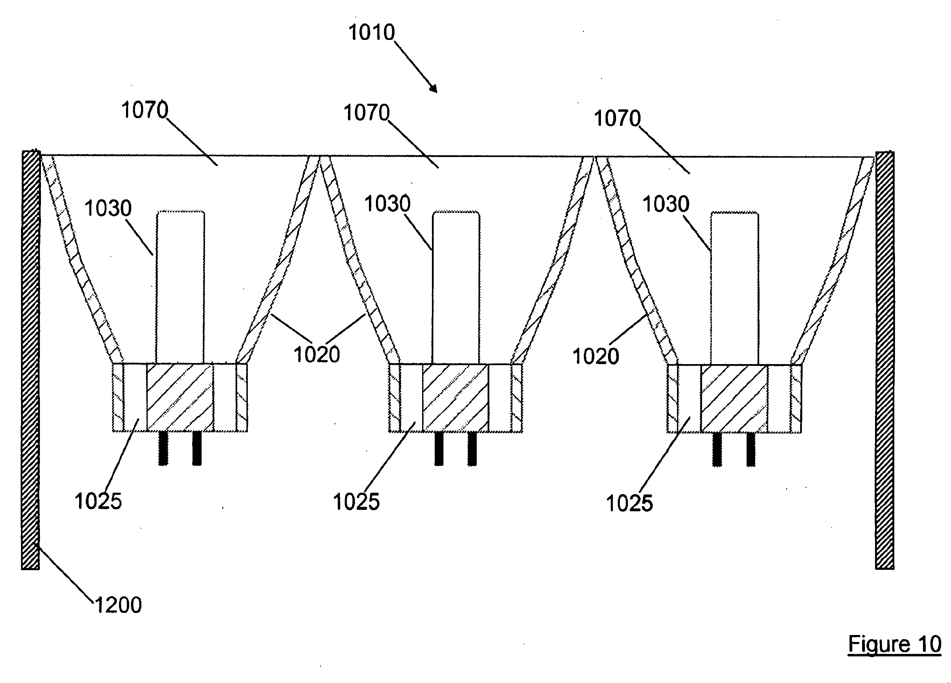

Figure 10 shows another example of the defrost system of the present invention where the system takes the form of a defrost system array 1010. The defrost system array 1010 comprises multiple infra red lamps 1030 with each lamp provided with a separate reflector 1020. The reflectors 1020 are arranged in a line or as cluster to best suit the packaging space and defrost requirements of a particular vehicle application and are at least partly surrounded by an insulating tube 1200. The insulating tube 1200 is arranged to keep the heat generated by the lamps 1030 within and above the reflectors 1020 to avoid the potential of heat damaging the surrounding structures such as the instrument panel (not shown). Air is guided past each lamp 1030 via passageways 1025. Each lamp 1030 is provided with at least one air passageway 1025. The infra red light and heated air are directed towards the windscreen via the top of the reflectors 1020 which define air outlets 1070.

In an alternative example of the present invention, not shown, the defrost system is provided with a bypass passageway. The bypass passageway is arranged to selectively return a proportion of the heated air from the air outlet to the air inlet. This reduces the time taken for the defrost system to achieve optimum operating temperature. The bypass passageway may be arranged to draw air from around the trough 490 adjacent to the air outlet 170. In this way, the flow of air drawn from the trough 490 clears any dust particles in the trough 490 and carries them to the filter 470 where they are trapped. This provides a dust trap or trough that is substantially self-cleaning which improves the air quality in the occupant compartment 2 and makes the defrost system very simple to maintain.

While the examples of the defrost system shown in the figures are generally circular in section, it will be appreciated by one skilled in the art that the shape of the lamp, reflector and insulating tube need not be limited to being circular. Defrost systems according to the present invention may be envisaged that take the form of elongate or curved individual defrost system units or arrays to optimise the use of available packaging space.

It is envisaged that the location of the defrost system of the present invention is not limited to the upper surface of the instrument panel of a vehicle, nor is it limited to defrosting a vehicle windscreen. The defrost system units or arrays may readily by disposed in appropriately positioned surfaces of roof pillars, roof trim components or rear-view mirrors to defrost any adjacent window.

In another example of the present invention (not shown), the defrost system has added functionality, provided by additional ducting, to supply heated air into the occupant compartment of the vehicle. In this example, the user may selectively direct at least a proportion of the heating effect of the defrost system from a default, defrost-position where the heating effect is concentrated on the windscreen to a comfort-position. This may be particularly advantageous in an electric vehicle where there is no internal combustion engine to provide heat for the occupant compartment.

Other advantages will be apparent to one skilled in the art and the present examples and embodiments are to be considered illustrative and not restrictive. The invention is not to be limited to the details given herein, but may be modified within the scope of the appended claims.

## Claims

1. An apparatus for defrosting a transparent member of a vehicle such as a windscreen (6), the apparatus comprising:
an infra red light source (30) arranged to emit infra-red light; and
a reflector means (20), at least partly surrounding the infra red light source and arranged to direct the infra red light towards the transparent member (6), the reflector means further defining, at least in part, a passageway (25, 45) between the infra red light source (30) and the reflector means (20) for guiding air towards the transparent member (6),
wherein the passageway (25, 45) comprises a screen (480), configured to be substantially transparent to infra red light and arranged to cover the reflector means adjacent to the transparent member and arranged to permit a free flow of air thereto, **characterised in that**:
the reflector means (20) is arranged to form a Venturi tube (200) comprising three portions:
a reflector portion forming an air outlet end (170), arranged to reflect and direct the infra red light from the infra red light source (30) towards the transparent member (6);
an air inlet (160), positioned distal from the reflector portion and configured to engage with an air duct; and
a throat portion (128) positioned between the air inlet (160) and the air outlet (170), wherein at least part of the infra red light source (30) is positioned adjacent to the throat portion (128) with the passageway (25, 45) formed therebetween and, wherein the throat portion (128) is arranged to accelerate the air past the infra red light source (30) towards the transparent member (6).

2. An apparatus according to claim 1, further comprising an insulated tube arranged to at least partly enclose the reflector means and infra red light source, wherein the tube is configured to mitigate heat loss from the enclosed portion of the reflector means.

3. An apparatus according to any of the preceding claims, further comprising an air filter arranged to filter the air before it enters the passageway, wherein the air filter is located upstream of the infra red light source.

4. An apparatus according to any of the preceding claims, further comprising a means to dehumidify the air before it enters the passageway, wherein the means to dehumidify the air is located upstream of the infra red light source.

5. An apparatus according to any of the preceding claims, further comprising a fan located upstream of the infra red light source, wherein the fan is arranged to force air through the passageway towards the transparent member.

6. An apparatus according to any of the preceding claims, further comprising a trough disposed between the screen and the insulating tube, wherein the trough is configured to catch and collect any dust or debris that may otherwise fall onto the infra red light source.

7. An apparatus according to any of the preceding claims, further comprising a sensor configured to measure the temperature of the reflector means.

8. An apparatus according to any of the preceding claims, further comprising a sensor configured to measure the pressure of the air in the air inlet upstream of the infra red light source.

9. An apparatus according to any of the preceding claims, further comprising a sensor configured to determine the presence of an obstruction between the apparatus and the transparent member.

10. An apparatus according to any of the preceding claims, further comprising control means arranged to control the operation of the apparatus in dependence of an input to the control means.

11. An apparatus according to claim 10 when dependent on any of claims 7 to 9, wherein the input to the control means is provided by the output from the or each sensor and, wherein the control means is arranged to control the operation of the apparatus in dependence on the output from the or each sensor.

12. A vehicle comprising an apparatus as claimed in any preceding claim, the vehicle further comprising a rain sensor, wherein the output of the rain sensor provides an input to the control means arranged to control the operation of the apparatus, such that any obscuration of the visible area of the transparent member is identified by the control means and to operate the apparatus in dependence thereon.

13. A vehicle according to claim 12 further comprising an ambient temperature sensor, wherein the output of the ambient temperature sensor provides an input to the control means arranged to control the operation of the apparatus, such that the control means monitors the ambient temperature and to operate the apparatus in dependence thereon.

14. A method for removing condensation and/or ice from a surface of a transparent member with an apparatus according to any of the claims 1-13 ; the method comprising:
directing infra red light from an infra red light source towards the surface of the transparent member by a reflector means;
directing air between the infra red light source and the reflector means to heat the air;
and
directing the heated air via the reflector means towards the surface of the transparent member, wherein
the operation of the infra red light source is controlled in dependence on the obscuration of a predetermined area of the transparent member.

## Patentansprüche

1. Vorrichtung zum Abtauen eines transparenten Elements eines Fahrzeugs, wie etwa einer Windschutzscheibe (6), wobei die Vorrichtung Folgendes umfasst:
eine Infrarotlichtquelle (30), die dazu angeordnet ist, Infrarotlicht auszustrahlen; und ein Reflektormittel (20), das mindestens teilweise die Infrarotlichtquelle umgibt und dazu angeordnet ist, das Infrarotlicht zu dem transparenten Element (6) zu lenken, wobei das Reflektormittel weiter mindestens teilweise einen Durchgang (25, 45) zwischen der Infrarotlichtquelle (30) und dem Reflektormittel (20) definiert, um Luft zu dem transparenten Element (6) zu leiten,
wobei der Durchgang (25, 45) eine Abschirmung (480) umfasst, die dazu ausgebildet ist, im Wesentlichen transparent für Infrarotlicht zu sein und dazu angeordnet ist, das Reflektormittel benachbart zu dem transparenten Element abzudecken und dazu angeordnet ist, einen ungehinderten Strom von Luft dazu zuzulassen, **dadurch gekennzeichnet, dass**:
das Reflektormittel (20) dazu angeordnet ist, ein Venturirohr (200) zu bilden, das drei Abschnitte umfasst:
einen Reflektorabschnitt, der ein Luftauslassende (170) bildet, der dazu angeordnet ist, das Infrarotlicht von der Infrarotquelle (30) zu reflektieren und zu dem transparenten Element (6) zu lenken;
einen Lufteinlass (160), der distal von dem Reflektorabschnitt positioniert ist und dazu ausgebildet ist, mit einem Luftkanal in Eingriff zu stehen; und
einen Halsabschnitt (128), der zwischen dem Lufteinlass (160) und dem Luftauslass (170) positioniert ist, wobei mindestens ein Teil der Infrarotlichtquelle (30) benachbart zu dem Halsabschnitt (128) positioniert ist und der Durchgang (25, 45) dazwischen gebildet ist und wobei der Halsabschnitt (128) dazu angeordnet ist, die Luft an der Infrarotlichtquelle (30) vorbei und zu dem transparenten Element (6) zu beschleunigen.

2. Vorrichtung nach Anspruch 1, weiter umfassend ein isoliertes Rohr, das dazu angeordnet ist, mindestens teilweise das Reflektormittel und die Infrarotlichtquelle einzuschließen, wobei das Rohr dazu ausgebildet ist, den Wärmeverlust von dem eingeschlossenen Abschnitt des Reflektormittels zu mindern.

3. Vorrichtung nach einem der vorangehenden Ansprüche, weiter umfassend einen Luftfilter, der dazu angeordnet ist, die Luft zu filtern, bevor sie in den Durchgang eintritt, wobei sich der Luftfilter stromaufwärts von der Infrarotlichtquelle befindet.

4. Vorrichtung nach einem der vorangehenden Ansprüche, weiter umfassend ein Mittel zum Entfeuchten der Luft, bevor sie in den Durchgang eintritt, wobei sich das Mittel zum Entfeuchten der Luft stromaufwärts von der Infrarotlichtquelle befindet.

5. Vorrichtung nach einem der vorangehenden Ansprüche, weiter umfassend ein Gebläse, das sich stromaufwärts von der Infrarotlichtquelle befindet, wobei das Gebläse dazu angeordnet ist, Luft durch den Durchgang zu dem transparenten Element zu zwingen.

6. Vorrichtung nach einem der vorangehenden Ansprüche, weiter umfassend eine Rinne, die zwischen der Abschirmung und dem isolierenden Rohr angeordnet ist, wobei die Rinne dazu ausgebildet ist, etwaigen Staub oder Schmutz aufzufangen und zu sammeln, der sonst auf die Infrarotlichtquelle fallen kann.

7. Vorrichtung nach einem der vorangehenden Ansprüche, weiter umfassend ein Sensormittel, das dazu ausgebildet ist, die Temperatur des Reflektormittels zu messen.

8. Vorrichtung nach einem der vorangehenden Ansprüche, weiter umfassend einen Sensor, der dazu ausgebildet ist, den Druck der Luft in dem Lufteinlass stromaufwärts von der Infrarotlichtquelle zu messen.

9. Vorrichtung nach einem der vorangehenden Ansprüche, weiter umfassend einen Sensor, der dazu ausgebildet ist, die Anwesenheit eines Hindernisses zwischen der Vorrichtung und dem transparenten Element festzustellen.

10. Vorrichtung nach einem der vorangehenden Ansprüche, weiter umfassend ein Regelungsmittel, das dazu angeordnet ist, den Betrieb der Vorrichtung in Abhängigkeit von einer Eingabe an das Regelungsmittel zu regeln.

11. Vorrichtung nach Anspruch 10 wenn abhängig von einem der Ansprüche 7 bis 9, wobei die Eingabe an das Regelungsmittel von der Ausgabe des bzw. jedes Sensors bereitgestellt wird, und wobei das Regelungsmittel dazu angeordnet ist, den Betrieb der Vorrichtung in Abhängigkeit von der Ausgabe von dem bzw. jedem Sensor zu regeln.

12. Fahrzeug, umfassend eine Vorrichtung nach einem der vorangehenden Ansprüche, wobei das Fahrzeug weiter einen Regensensor umfasst, wobei die Ausgabe des Regensensors eine Eingabe an das Regelungsmittel bereitstellt, das dazu angeordnet ist, den Betrieb der Vorrichtung so zu regeln, dass jede Trübung des sichtbaren Bereichs des transparenten Elements von dem Regelungsmittel identifiziert wird, und die Vorrichtung in Abhängigkeit davon zu betreiben.

13. Fahrzeug nach Anspruch 12, weiter umfassend einen Umgebungstemperatursensor, wobei die Ausgabe des Umgebungstemperatursensors eine Eingabe an das Regelungsmittel bereitstellt, das dazu angeordnet ist, den Betrieb der Vorrichtung so zu regeln, dass das Regelungsmittel die Umgebungstemperatur beobachtet und die Vorrichtung in Abhängigkeit davon zu betreiben.

14. Verfahren zum Entfernen von Kondenswasser und/oder Eis von einer Oberfläche eines transparenten Elements mit einer Vorrichtung nach einem der Ansprüche 1-13, wobei das Verfahren Folgendes umfasst:
Lenken von Infrarotlicht von einer Infrarotlichtquelle zu der Oberfläche des transparenten Elements durch ein Reflektormittel;
Lenken von Luft zwischen die Infrarotlichtquelle und das Reflektormittel um die Luft zu erwärmen;
und
Lenken der erwärmten Luft über das Reflektormittel zu der Oberfläche des transparenten Elements, wobei
der Betrieb der Infrarotlichtquelle in Abhängigkeit von der Trübung eines vorherbestimmten Bereichs des transparenten Elements geregelt wird.

## Revendications

1. Appareil de dégivrage d'un élément transparent d'un véhicule tel qu'un pare-brise (6), l'appareil comprenant :
une source de lumière infrarouge (30) agencée pour émettre une lumière infrarouge ; et
un moyen réflecteur (20), entourant au moins partiellement la source de lumière infrarouge et agencé pour diriger la lumière infrarouge vers l'élément transparent (6), le moyen réflecteur définissant en outre, au moins en partie, un passage (25, 45) entre la source de lumière infrarouge (30) et le moyen réflecteur (20) pour guider l'air vers l'élément transparent (6),
dans lequel le passage (25, 45) comprend un écran (480), configuré pour être sensiblement transparent à la lumière infrarouge et agencé pour couvrir le moyen réflecteur adjacent à l'élément transparent et agencé pour permettre un écoulement libre d'air jusqu'à ce dernier, **caractérisé en ce que** :
le moyen réflecteur (20) est agencé pour former un tube Venturi (200) comprenant trois parties :
une partie réflectrice formant une extrémité de sortie d'air (170), agencée pour réfléchir et diriger la lumière infrarouge provenant de la source de lumière infrarouge (30) vers l'élément transparent (6) ;
une admission d'air (160), positionnée distalement à la partie réflectrice et configurée pour s'engager avec un conduit d'air ; et
une partie de gorge (128) positionnée entre l'admission d'air (160) et la sortie d'air (170), au moins une partie de la source de lumière infrarouge (30) étant positionnée à proximité de la partie de gorge (128), le passage (25, 45) étant formé entre elles, et la partie de gorge (128) étant agencée pour accélérer l'air devant la source de lumière infrarouge (30) vers l'élément transparent (6).

2. Appareil selon la revendication 1, comprenant en outre un tube isolé agencé pour enfermer au moins partiellement le moyen réflecteur et la source de lumière infrarouge, le tube étant configuré pour réduire la perte de chaleur de la partie enfermée du moyen réflecteur.

3. Appareil selon l'une quelconque des revendications précédentes, comprenant en outre un filtre à air agencé pour filtrer l'air avant qu'il entre dans le passage, le filtre à air étant situé en amont de la source de lumière infrarouge.

4. Appareil selon l'une quelconque des revendications précédentes, comprenant en outre un moyen de déshumidification de l'air agencé pour déshumidifier l'air avant qu'il entre dans le passage, dans lequel le moyen de déshumidification de l'air est situé en amont de la source de lumière infrarouge.

5. Appareil selon l'une quelconque des revendications précédentes, comprenant en outre un ventilateur situé en amont de la source de lumière infrarouge, dans lequel le ventilateur est agencé pour forcer l'air à travers le passage vers l'élément transparent.

6. Appareil selon l'une quelconque des revendications précédentes, comprenant en outre une rigole disposée entre l'écran et le tube isolant, dans lequel la rigole est configurée pour attraper et collecter poussières et débris quelconques qui autrement risqueraient de tomber sur la source de lumière infrarouge.

7. Appareil selon l'une quelconque des revendications précédentes, comprenant en outre un capteur configuré pour mesurer la température du moyen réflecteur.

8. Appareil selon l'une quelconque des revendications précédentes, comprenant en outre un capteur configuré pour mesurer la pression de l'air dans l'admission d'air en amont de la source de lumière infrarouge.

9. Appareil selon l'une quelconque des revendications précédentes, comprenant en outre un capteur configuré pour déterminer la présence d'une obstruction entre l'appareil et l'élément transparent.

10. Appareil selon l'une quelconque des revendications précédentes, comprenant en outre un moyen de commande agencé pour commander le fonctionnement de l'appareil en fonction d'une entrée dans le moyen de commande.

11. Appareil selon la revendication 10 dépendante de l'une quelconque des revendications 7 à 9, dans lequel l'entrée dans le moyen de commande est fournie par la sortie du ou de chaque capteur et, dans lequel le moyen de commande est agencé pour commander le fonctionnement de l'appareil en fonction de la sortie du ou de chaque capteur.

12. Véhicule comprenant un appareil selon l'une quelconque des revendications précédentes, le véhicule comprenant en outre un capteur de pluie, dans lequel la sortie du capteur de pluie fournit une entrée allant au moyen de commande agencé pour commander le fonctionnement de l'appareil, de telle sorte que tout obscurcissement de la zone visible de l'élément transparent soit identifié par le moyen de commande et pour actionner l'appareil en fonction de cette identification.

13. Appareil selon la revendication 12, comprenant en outre un capteur de température ambiante, dans lequel la sortie du capteur de température ambiante constitue une entrée du moyen de commande agencé pour commander le fonctionnement de l'appareil, de telle sorte que le moyen de commande contrôle la température ambiante et pour actionner l'appareil en fonction de cette entrée.

14. Procédé d'élimination de condensation et/ou de givre sur une surface d'un élément transparent avec un appareil selon l'une quelconque des revendications 1 à 13, le procédé comprenant :
l'orientation d'une lumière infrarouge provenant d'une source de lumière infrarouge vers la surface de l'élément transparent par un moyen réflecteur ;
l'orientation d'air entre la source de lumière infrarouge et le moyen réflecteur afin de chauffer l'air ;
et
l'orientation de l'air chauffé par l'intermédiaire du moyen réflecteur vers la surface de l'élément transparent, dans lequel
le fonctionnement de la source de lumière infrarouge est commandé en fonction de l'obscurcissement d'une zone prédéterminée de l'élément transparent.
